# EUROPÄISCHE PATENTSCHRIFT

(11) **EP 2 289 610 B1**
(45) Veröffentlichungstag und Bekanntmachung des Hinweises auf die Patenterteilung: **06.07.2016**
(21) Anmeldenummer: 10173012.5
(22) Anmeldetag: 17.08.2010
(51) Int. Cl.: B01D 53/26, B60T 17/00

(54) **Verfahren zum Regenerieren einer Druckluftversorgungseinrichtung, Steuereinrichtung und Druckluftversorgungseinrichtung**
Method for regenerating a compressed air supply device, control device and compressed air supply device
Procédé de régénération d'un dispositif d'alimentation en air comprimé, dispositif de commande et dispositif d'alimentation en air comprimé

(30) Priorität: 26.08.2009 DE 102009038600
(43) Veröffentlichungstag der Anmeldung: 02.03.2011
(73) Patentinhaber: KNORR-BREMSE Systeme für Nutzfahrzeuge GmbH, 80809 München (DE)
(72) Erfinder: Bordacs, Zoltán, 8200, Veszprém (HU); Nemeth, Huba, 1116, Budapest (HU); Szoboszlay, András, 2097, Pilisborosjenö (HU)
(74) Vertreter: Mattusch, Gundula

(56) Entgegenhaltungen:
- EP-A1- 0 036 569
- EP-A2- 0 689 117
- EP-A2- 1 964 743
- WO-A1-02/24505
- WO-A1-97/11274
- DE-A1- 4 219 101
- DE-A1-102007 026 249
- DE-A1-102007 032 963
- DE-B3-102006 019 865

## Beschreibung

Die vorliegende Erfindung betrifft ein Verfahren zum Regenerieren einer Druckluftversorgungseinrichtung eines Nutzfahrzeugs, die einen ersten Druckluftkreis mit Druckluft versorgt. Mit Druckluft aus dem ersten Druckluftkreis wird ein Regenerieren der Druckluftversorgungseinrichtung durchgeführt. Die vorliegende Erfindung betrifft außerdem ein Verfahren zum Regenerieren einer Druckluftversorgungseinrichtung eines Nutzfahrzeugs, bei dem die Druckluftversorgungseinrichtung zum Versorgen eines ersten Druckluftkreises und eines zweiten Druckluftkreises eingerichtet ist. Außerdem betrifft die vorliegende Erfindung eine elektronische Steuereinrichtung für eine Druckluftvorrichtung eines Nutzfahrzeugs, welche dazu eingerichtet ist, eines der erfindungsgemäßen Verfahren zu steuern, sowie eine Druckluftversorgungseinrichtung mit einer derartigen elektronischen Steuereinrichtung.

Druckluftversorgungseinrichtungen erfüllen bei Nutzfahrzeugen, beispielsweise bei Lastkraftwagen und Traktoren, wichtige Aufgaben. In der Regel ist ein Kompressor vorgesehen, der Umgebungsluft ansaugt. Derartige Umgebungsluft enthält allerdings in der Regel ein relativ hohes Maß an Feuchtigkeit und andere störende Bestandteile, welche nicht den Druckluftverbrauchern zugeführt werden sollen. Um zu verhindern, dass insbesondere zu feuchte Luft den Luftverbrauchern zugeführt wird, ist bei Druckluftversorgungseinrichtungen üblicherweise eine Filtereinrichtung mit einem Lufttrockner zum Entfeuchten der angesaugten Luft vorgesehen. Die Luft durchströmt den Lufttrockner, der im Allgemeinen mit einer Lufttrocknerpatrone versehen ist, die der durch sie strömenden Luft die Feuchtigkeit entzieht. Auch andere störende Bestandteile können in der Filtereinrichtung aus der Luft gefiltert werden. Die getrocknete und gefilterte Luft wird dann den Druckluftverbrauchern wie beispielsweise der Betriebsbremsanlage, einer Feststellvorrichtung mit Federspeichern, einer Luftfederung des Fahrzeugs oder Druckluftverbrauchern eines Anhängers zugeführt.

Je mehr Luft durch den Lufttrockner geführt wird, desto mehr Feuchtigkeit sammelt sich in dem Lufttrockner beziehungsweise der Lufttrocknerpatrone. Die Aufnahmefähigkeit des Lufttrockners für Feuchtigkeit ist allerdings begrenzt und läuft in eine Sättigung hinein. Ist das Sättigungsfeuchtigkeitsniveau eines Lufttrockners beziehungsweise einer Lufttrocknerpatrone erreicht, kann der Lufttrockner beziehungsweise die Lufttrocknerpatrone keine weitere Feuchtigkeit aufnehmen, so dass weiter hindurchströmende Luft ungetrocknet in die Druckluftverbraucherkreise eingespeist wird, was zu einer Beeinträchtigung der Funktionsfähigkeit der Druckluftverbrauchersysteme führen kann.

Daher werden Druckluftversorgungseinrichtungen regeneriert. Bei einem Regenerierungsvorgang wird der Druckluftstrom durch den Lufttrockner umgekehrt, etwa indem Druckluft aus Versorgungstanks einer der Druckluftkreise des Nutzfahrzeugs durch den Lufttrockner in die Atmosphäre abgelassen wird. Beim Durchströmen des Lufttrockners in Regenerierungsrichtung entfernt die durchströmende Luft Feuchtigkeit und eventuell weitere Fremdpartikel aus dem Filter und dem Lufttrockner. Ein solches Regenerieren verbraucht also Druckluft und führt daher zu einem Druckabfall in dem Druckluftreservoir, aus dem die Regenerierungsdruckluft stammt.

Wenn ein Lufttrockner allerdings sein Sättigungsniveau erreicht hat, wird Luft, die ihn zur Versorgung der Druckluftverbraucher durchströmt, nicht weiter entfeuchtet, das heißt, den Druckluftverbrauchern wird feuchte Luft zugeführt. Wird bei einer Regenerierung diese feuchte Luft in Regenerierungsrichtung durch den Lufttrockner geführt, führt dies nur zu einer eingeschränkten Regenerierung, da die feuchte Regenerierungsluft die Lufttrocknerpatrone nicht effizient trocknen kann. Ein Lufttrockner, der sein Sättigungsfeuchtigkeitsniveau erreicht hat, kann also nicht nur seine Aufgabe, die Versorgungsluft zu entfeuchten, nicht mehr erfüllen, sondern kann auch nur schwer und langsam getrocknet beziehungsweise regeneriert werden.

Bei modernen Nutzfahrzeugen wird häufig vor dem Losfahren ein Befüllen der Druckluftreservoirs verschiedener Druckluftverbraucherkreise durchgeführt. Es ist dabei bekannt, ein einmaliges Regenerieren der Druckluftversorgungseinrichtung durchzuführen, wenn die Betriebsbremsanlage eines Nutzfahrzeugs auf Maximaldruck gebracht ist. Dabei wird Druckluft aus der Betriebsbremsanlage verwendet, die danach wieder auf den Maximaldruck gebracht wird. Üblicherweise beträgt der maximale Befüllungsdruck einer Betriebsbremsanlage eines Nutzfahrzeugs 12,5 bar. Die Regenerierung wird in der Regel durchgeführt, bis ein vorbestimmter Druckverlust in der Betriebsbremsanlage vorliegt, so dass der Druck in dieser Anlage beispielsweise auf 11 oder 10 bar abgesenkt wird.

Die DE 10 2007 026 249 A1 beschreibt ein Druckluftsystem mit einem Hochdruckbehälter aus dem schnell ein Druckluftkreis nachgespeist werden kann. Eine Regeneration eines Lufttrockners ist mit Druckluft aus einem oder mehreren Druckluftkreisen möglich, so dass in der Regel getrocknete Luft zur Regeneration zur Verfügung steht, die besonders effektiv beim Regenerieren ist.

Die DE 10 2006 048 071 A1 beschreibt eine Druckluftversorgungsanlage deren Regenerationsvorgang durch automatisches Bestimmen von Anlagengrößen bei der Erstbefüllung optimiert werden kann.

Die WO 02/096732 A1 beschreibt ein Verfahren zur Regeneration eines Lufttrockners, bei dem die zur Regeneration erforderliche Luftmenge anhand des getrockneten Luftvolumens bestimmt wird.

Insbesondere bei Nutzfahrzeugen mit einem sehr hohen Druckluftverbrauch kann es aber trotz solcher herkömmlicher Regenerierungsvorgänge vorkommen, dass der Lufttrockner ein sehr hohes Feuchtigkeitsniveau oder sogar ein gesättigtes Feuchtigkeitsniveau erreicht. Beispielsweise verwenden Nutzfahrzeuge, die über eine Containerhebevorrichtung verfügen, aber nur geringe Strecken zurücklegen, wie zum Beispiel Fahrzeuge zum Transportieren von Container in Hafenanlagen, pneumatische Hebeanlagen mit bis zu 15 bar. Aufgrund der häufigen Hebe- und Absenkvorgänge ist bei derartigen Fahrzeugen der benötigte Druckluftstrom durch den Lufttrockner so groß, dass eine herkömmliche Lufttrocknerpatrone schnell das Sättigungsniveau erreicht.

Ein Weg, um auch bei Nutzfahrzeugen mit einem hohen Druckluftverbrauch eine schnelle Sättigung des Lufttrockners zu vermeiden, besteht darin, die Entfeuchtungskapazität der Lufttrocknerpatrone zu erhöhen. Dies kann insbesondere dadurch geschehen, dass die Lufttrocknerpatrone in ihren Ausmaßen vergrößert wird. Die Entwicklung größerer Lufttrocknerpatronen ist allerdings aufwendig, da mit vergrößerten Durchströmungsflächen für den Luftstrom deutlich vergrößerte Kräfte auf die Elemente der Lufttrocknerpatrone auftreten. Darüber hinaus erhöht sich die Zeit, die eine vergrößerte Lufttrocknerpatrone zum Trocknen braucht, sollte sie bis zum Sättigungsniveau befeuchtet werden.

Daher besteht ein Bedarf für ein verbessertes Verfahren und für eine verbesserte Druckluftversorgungseinrichtung, bei denen vermieden wird, dass der Lufttrockner ein zu hohes Feuchtigkeitsniveau erreicht, und insbesondere, dass der Lufttrockner ein Feuchtigkeitssättigungsniveau erreicht.

Im Rahmen dieser Beschreibung kann es sich bei dem ersten Druckluftkreis insbesondere um den Druckluftkreis einer Betriebsbremse handeln. Es kann auch ein weiterer Druckluftkreis der Betriebsbremse vorgesehen sein. Insbesondere ist es möglich, dass die beiden Druckluftkreise der Betriebsbremse parallel befüllt werden. Hinsichtlich dieser Beschreibung können dann beide Betriebsbremsdruckluftkreise als erster Druckluftkreis angesehen werden. Der zweite Druckluftkreis kann insbesondere ein Druckluftkreis sein, welcher einer Feststellbremsanlage zugeordnet ist und auch weitere Druckluftverbraucher beispielsweise eines Anhängers mit Druckluft versorgt. Ferner können noch weitere Druckluftkreise vorgesehen sein, etwa solche, die zur Versorgung eines Verbrauchers mit besonders hohem Druckluftverbrauch dienen. In der Regel werden derartige Druckluftverbraucher bei einem initialen Befüllen der Druckluftverbraucherkreise erst nach dem Befüllen der anderen Druckluftkreise, insbesondere der Druckluftkreise der Betriebsbremsanlage, mit Druckluft befüllt. Der Zeitpunkt der Befüllung derartiger zusätzlicher Druckluftkreise ist allerdings nicht vorgeschrieben und kann den Erfordernissen des Einzelfalls gemäß geschehen.

Ein Maximaldruckwert entspricht einem maximalen Druck, bis zu dem ein Druckluftkreis mit Druckluft befüllt werden soll; es kann sich dabei zum Beispiel um den maximalen für eine Betriebsbremsanlage vorgesehenen Druck handeln, der üblicherweise bei 12,5 bar liegt. Ein Minimalsolldruck kann einem minimalen Druck entsprechen, bei dem ein Druckluftkreis als funktionsfähig angesehen wird. Aufgrund gesetzlicher Vorschriften liegt für Betriebsbremsanlagen üblicherweise ein Minimalsolldruckwert von 7,5 bar vor. Für anderen Druckluftverbrauchersystemen zugeordnete Druckluftkreise können Maximaldruckwert und Minimalsolldruckwert andere geeignete Werte annehmen. Ein Minimalsolldruckwert muss allerdings nicht für alle Druckluftkreise definiert sein.

Ein Lufttrockner kann über eine Lufttrocknerpatrone verfügen, die austauschbar sein kann.

Das Feuchtigkeitsniveau des Lufttrockners kann auf bekannte Art bestimmt werden. Insbesondere kann vorgesehen sein, dass das Feuchtigkeitsniveau über einen Sensor bestimmt oder aus erfassten Parametern errechnet wird. Dazu können ein oder mehrere geeignete Sensoren sowie eine geeignete Steuereinrichtung vorgesehen sein. Auch zum Bestimmen des Drucks in den Druckluftkreisen können geeignete Sensoren verwendet werden. Im Rahmen dieser Beschreibung wird ein Feuchtigkeitsniveau durch einen Feuchtigkeitswert parametrisiert. Dabei entspricht ein höherer Feuchtigkeitswert einer höheren Feuchtigkeit des Lufttrockners beziehungsweise der Lufttrocknerpatrone.

Das Feuchtigkeitsniveau kann als sogenannter Wetnesslevel bestimmt werden, der einem Volumen von durch den Lufttrockner geführter Normluft entspricht. Beispielsweise kann eine übliche Lufttrocknerpatrone eine Kapazität von 10.000 I Normluft haben, bevor sie ihren Sättigungsgrad bei einem Wetnesslevel von 10.000 I erreicht. Eine besonders große Lufttrocknerpatrone kann beispielsweise einen Wetnesslevel von 15.000 I aufweisen, wenn sie ihr Sättigungsniveau erreicht.

### Abriss der Erfindung

Die Erfindung betrifft ein Verfahren zum Regenerieren einer Druckluftversorgungseinrichtung eines Nutzfahrzeugs, wobei die Druckluftversorgungseinrichtung einen Lufttrockner aufweist und geeignet ist, einen ersten Druckluftkreis, dem ein vorbestimmter Maximaldruckwert zugeordnet ist, und einen zweiten Druckluftkreis mit Druckluft zu versorgen. Gemäß diesem Verfahren wird der erste Druckluftkreis mit Druckluft versorgt, bis der Druck im ersten Druckluftkreis einen vorbestimmten Zieldruckwert erreicht hat. Liegt nun ein Feuchtigkeitsniveau des Lufttrockners über einem vorbestimmten Zielfeuchtigkeitsniveau, wird ein Regenerieren des Lufttrockners mit Druckluft aus dem ersten Druckluftkreis durchgeführt. Das Regenerieren wird beendet, wenn der Druck im ersten Druckluftkreis einen vorbestimmten Grenzdruckwert erreicht hat oder das Feuchtigkeitsniveau des Lufttrockners das Zielfeuchtigkeitsniveau erreicht hat. Dann wird der erste Druckluftkreis mit Druckluft versorgt, bis er den Zieldruckwert erreicht hat. Ist das Feuchtigkeitsniveau des Lufttrockners noch größer als das Zielfeuchtigkeitsniveau, werden diese Schritte wiederholt. Ansonsten wird der zweite Druckluftkreis mit Druckluft versorgt. Es wird also der zweite Druckluftkreis erst mit Druckluft versorgt, wenn der erste Druckluftkreis den Zieldruckwert erreicht hat und das Feuchtigkeitsniveau des Lufttrockners auf oder unter dem Zielfeuchtigkeitsniveau liegt. Die Druckluftversorgungseinrichtung befindet sich somit bei Beginn des Versorgens des zweiten Druckluftkreises mit Druckluft auf einem gut definierten Niveau. Insbesondere ist ein niedriges Feuchtigkeitsniveau des Lufttrockners gewährleistet.

Es kann besonders zweckmäßig sein, dass der Zieldruckwert der Maximaldruckwert ist. Somit wird der erste Druckluftkreis bis zum Maximum befüllt, bevor mit dem Befüllen des zweiten Druckluftkreises begonnen wird.

Bei einer Weiterbildung der Erfindung ist vorgesehen, dass der Grenzdruckwert größer als ein Minimaldruckwert des ersten Druckluftkreises ist. Somit wird während des Regenerierens der Druck im ersten Druckluftkreis nie auf den Minimalsolldruckwert absinken.

Es ist insbesondere zweckmäßig, wenn das Zielfeuchtigkeitsniveau beziehungsweise der entsprechende Zielfeuchtigkeitswert einem trockenen Lufttrockner entspricht. Es wird also der Lufttrockner vollständig regeneriert, bevor der zweite Druckluftkreis mit Druckluft versorgt wird. Bei Beginn der Versorgung des zweiten Druckluftkreises mit Druckluft kann der Lufttrockner also das größtmögliche Maß an Feuchtigkeit aufnehmen. Damit wird ein schnelles Erreichen der Sättigungsgrenze verhindert. Selbstverständlich kann vorgesehen sein, dass während des Befüllens des zweiten Druckluftkreises eine weitere Regenerierungsstrategie verfolgt wird. Beispielsweise ist es vorstellbar, dass das weiter unten beschriebene Verfahren zum Regenerieren vorgesehen ist.

Bei einer bevorzugten Ausführungsform ist vorgesehen, dass die verwendeten Parameter während des Verfahrens angepasst werden. Insbesondere ist vorgesehen, dass während einer Wiederholung von Verfahrensschritten ein geänderter Zieldruckwert und/oder ein geänderter Zielfeuchtigkeitswert und/oder ein geänderter Grenzdruckwert verwendet werden. Eine Parameteränderung kann beispielsweise durch eine elektronische Steuereinrichtung leicht vorgenommen werden, indem etwa geänderte Werte in einen Speicher geschrieben werden. Dadurch lässt sich eine dynamische Anpassung des Regenerierungsvorgangs beispielsweise an geänderte Umweltbedingungen oder an Änderungen im Druckluftsystem des Fahrzeugs erreichen, etwa wenn nach Erreichen eines bestimmten Druckwertes im ersten Druckluftkreis ein weiterer Druckluftkreis durch die Druckluftversorgungseinrichtung mit Druckluft versorgt werden soll, bevor der zweite Druckluftkreis befüllt werden soll. Eine solche Parameteränderung kann insbesondere in Reaktion auf Sensorsignale erfolgen.

Weiterhin kann vorgesehen sein, dass das Verfahren beziehungsweise Schritte des Verfahrens während eines Fahrbetriebs durchgeführt wird. Dazu müssen selbstverständlich die gesetzlich vorgeschriebenen Drücke beispielsweise bei der Betriebsbremse erreicht sein. Somit kann ein Fahrer dann, wenn die erforderlichen Bedingungen zum Betreiben des Fahrzeugs erfüllt sind, schon das Nutzfahrzeug einsetzen und muss nicht darauf warten, dass Regenerierungsvorgänge abgeschlossen werden. Dies lässt sich insbesondere dadurch erreichen, dass dann, wenn der erste Druckluftkreis ein Druckluftkreis einer Betriebsbremse ist, der erste Druckwert oberhalb des zum Betrieb vorgeschriebenen Minimalsolldruckwertes angesetzt wird, etwa bei 9 bar. Der Grenzdruckwert wird zweckmäßigerweise beispielsweise auf 8 bar gesetzt, so dass sich der Druck in der Betriebsbremsanlage nach dem Erreichen des ersten Druckwerts, bei dem ein Regenerieren durchgeführt werden kann, auch nach einem Druckluft verbrauchenden Regenerierungsvorgang oberhalb des zum Einsatz des Nutzfahrzeugs vorgeschriebenen Druckwertes befindet.

Insbesondere kann vorgesehen sein, dass das Verfahren bei einem initialen Befüllen der Druckluftkreise des Nutzfahrzeugs, bevor das Nutzfahrzeug eingesetzt wird, beziehungsweise bei einem Start des Nutzfahrzeug gestartet oder durchgeführt wird. Bei einem solchen initialen Befüllen werden üblicherweise große Mengen an Druckluft zu den Verbraucherkreisen geführt, und der Lufttrockner entsprechend belastet. Wird allerdings das beschriebene Verfahren angewendet, bleibt das Feuchtigkeitsniveau des Lufttrockners niedrig.

Erfindungsgemäß ist ferner ein Verfahren zum Regenerieren einer Druckluftversorgungseinrichtung eines Nutzfahrzeugs vorgesehen. Die Druckluftversorgungseinrichtung weist einen Lufttrockner auf. Verfahrensgemäß wird ein erster Druckluftkreis des Nutzfahrzeugs mit Druckluft versorgt, wobei dem ersten Druckluftkreis ein vorbestimmter Maximaldruckwert zugeordnet ist. Zweckmäßigerweise kann der erste Druckluftkreis der Druckluftkreis eine Betriebsbremsanlage des Nutzfahrzeugs sein; es ist allerdings auch vorstellbar, dass der erste Druckluftkreis einem anderen Druckluftverbrauchersystem zugeordnet ist. Wenn der Druck im ersten Druckluftkreis einen vorbestimmten ersten Druckwert aufweist und mindestens ein vorbestimmtes erstes Feuchtigkeitsniveau des Lufttrockners vorliegt, wird ein Regenerieren des Lufttrockners mit Druckluft aus dem ersten Druckluftkreis durchgeführt. Das Regenerieren wird beendet, wenn ein vorbestimmter zweiter Druckwert im ersten Druckluftkreis vorliegt, der unter dem ersten Druckwert liegt, oder wenn ein vorbestimmtes zweites Feuchtigkeitsniveau des Lufttrockners vorliegt. Wenn nach Beenden des Regenerierens der Druck im ersten Druckluftkreis geringer ist als ein Zieldruckwert, werden diese Schritte wiederholt durchgeführt. Der erste Druckwert ist kleiner als der Zieldruckwert, bis zu dem der erste Druckluftkreis mit Druckluft aufgefüllt werden soll. Das zweite Feuchtigkeitsniveau liegt unter dem ersten Feuchtigkeitsniveau. Durch dieses Verfahren wird eine Art Zwischenregenerierung durchgeführt, bevor der Zieldruckwert im ersten Druckluftkreis erreicht ist. Somit wird regelmäßig während des Befüllens des ersten Druckluftkreises auf den Zieldruckwert ein Regenerieren durchgeführt, wenn ein ausreichender Druck im ersten Druckluftkreis vorliegt und ein erstes Feuchtigkeitsniveau des Lufttrockners erreicht oder überschritten ist. Somit wird ein im Gegensatz zum Stand der Technik frühes und häufiges Regenerieren erreicht, wodurch die Feuchtigkeit des Lufttrockners auf einem niedrigen Niveau gehalten wird. Dadurch wird zum einen verhindert, dass die Feuchtigkeit des Lufttrockners das Sättigungsniveau erreicht. Andererseits wird allgemein das Feuchtigkeitsniveau niedrig gehalten, wodurch sich die Leistungsfähigkeit des Lufttrockners im Betrieb erhöht.

Insbesondere kann vorgesehen sein, dass das Verfahren bei einem initialen Befüllen der Druckluftkreise des Nutzfahrzeugs, bevor das Nutzfahrzeug eingesetzt wird, beziehungsweise bei einem Start des Nutzfahrzeug gestartet oder durchgeführt wird. Bei einem solchen initialen Befüllen werden üblicherweise große Mengen an Druckluft zu den Verbraucherkreisen geführt, und der Lufttrockner entsprechend belastet. Wird allerdings das beschriebene Verfahren angewendet, bleibt das Feuchtigkeitsniveau des Lufttrockners niedrig.

Zweckmäßigerweise liegt der zweite Druckwert über einem Minimalsolldruckwert des ersten Druckluftkreises, so dass der Druck im ersten Druckluftkreis immer über diesem Minimalsolldruckwert liegt. Somit kann der erste Druckluftkreis auch während des beschriebenen Verfahrens eingesetzt werden. Dies gilt insbesondere für den Fall einer Betriebsbremse, bei dem allein aus gesetzlichen Gründen ein minimaler Druck in der Betriebsbremsanlage vorliegen muss, damit das Fahrzeug in Bewegung gesetzt werden darf.

Es ist vorteilhaft, wenn der erste und der zweite Feuchtigkeitswert unter einem Sättigungsfeuchtigkeitswert des Lufttrockners liegen. Somit wird die Regenerierung durchgeführt, bevor das Sättigungsfeuchtigkeitsniveau im Lufttrockner erreicht wird. Das Feuchtigkeitsniveau in der Lufttrocknerpatrone bewegt sich verfahrensgemäß zwischen dem ersten und zweiten Feuchtigkeitsniveau und liegt damit in einem gut definierten Bereich, wodurch sich ein für das Betreiben der Druckluftversorgungseinrichtung effizientes Feuchtigkeitsniveau in dem Lufttrockner einstellen lässt. Es kann dabei besonders vorteilhaft sein, wenn der erste Feuchtigkeitswert ein Drittel des Sättigungsfeuchtigkeitswertes oder weniger beträgt, um den Lufttrockner mit einer sehr geringen Feuchtigkeit zu betreiben.

Bei einer vorteilhaften Ausführungsform werden zwischen Regenerierungsvorgängen beziehungsweise während einer Wiederholung ein geänderter erster Druckwert und/oder ein geänderter zweiter Druckwert verwendet. Auch ist es vorstellbar, dass ein geänderter erster Feuchtigkeitswert und/oder ein geänderter zweiter Feuchtigkeitswert verwendet werden. Die verwendeten Parameter werden also während des Verfahrens angepasst. Eine Parameteränderung kann beispielsweise durch eine elektronische Steuereinrichtung leicht vorgenommen werden, indem etwa geänderte Werte in einen Speicher geschrieben werden. Dadurch lässt sich eine dynamische Anpassung des Regenerierungsvorgangs beispielsweise an geänderte Umweltbedingungen oder an Änderungen im Druckluftsystem des Fahrzeugs erreichen, etwa wenn nach Erreichen eines bestimmten Druckwertes im ersten Druckluftkreis ein weiterer Druckluftkreis durch die Druckluftversorgungseinrichtung mit Druckluft versorgt werden soll. Eine derartige Parameteränderung kann insbesondere in Reaktion auf Sensorsignale erfolgen.

Die Erfindung kann dahingehend weitergebildet werden, dass das Verfahren beziehungsweise Schritte des Verfahrens während eines Fahrbetriebs durchgeführt wird. Dazu müssen selbstverständlich die gesetzlich vorgeschriebenen Drücke beispielsweise bei der Betriebsbremse erreicht sein. Somit kann ein Fahrer dann, wenn die erforderlichen Bedingungen zum Betreiben des Fahrzeugs erfüllt sind, schon das Nutzfahrzeug einsetzen und muss nicht darauf warten, dass Regenerierungsvorgänge abgeschlossen werden. Dies lässt sich insbesondere dadurch erreichen, dass dann, wenn der erste Druckluftkreis ein Druckluftkreis einer Betriebsbremse ist, der erste Druckwert oberhalb des zum Betrieb vorgeschriebenen Minimalsolldruckwertes angesetzt wird, etwa bei 9 bar. Der zweite Druckwert wird zweckmäßigerweise beispielsweise auf 8 bar gesetzt, so dass sich der Druck in der Betriebsbremsanlage nach dem Erreichen des ersten Druckwerts, bei dem ein Regenerieren durchgeführt werden kann, auch nach einem Druckluft verbrauchenden Regenerierungsvorgang oberhalb des zum Einsatz des Nutzfahrzeugs vorgeschriebenen Druckes befindet.

In einer besonders bevorzugten Ausführungsform kann vorgesehen sein, dass die Druckluftversorgungseinrichtung ferner dazu geeignet ist, einen zweiten Druckluftkreis mit Druckluft zu versorgen. Nachdem der Zieldruckwert im ersten Druckluftkreis erreicht ist, wird bei dieser Ausführungsform dann, wenn das Feuchtigkeitsniveau des Lufttrockners über einem vorbestimmten Zielfeuchtigkeitsniveau liegt, ein Regenerierungsvorgang des Lufttrockners mit Druckluft aus dem ersten Druckluftkreis durchgeführt. Das Regenerieren wird beendet, wenn der Druck im ersten Druckluftkreis einen vorbestimmten Grenzdruckwert erreicht hat oder das Feuchtigkeitsniveau des Lufttrockners das Zielfeuchtigkeitsniveau erreicht hat. Dann wird der erste Druckluftkreis mit Druckluft befüllt, bis der Druck im ersten Druckluftkreis dem Zielsolldruck entspricht. Ist nun das Feuchtigkeitsniveau des Lufttrockners größer als das Zielfeuchtigkeitsniveau, wird ein erneutes Regenerieren mit den eben erwähnten Bedingungen durchgeführt. Liegt allerdings im ersten Druckluftkreis ein Druck vor, der dem Zieldruckwert entspricht und ist das Feuchtigkeitsniveau des Lufttrockners kleiner oder gleich dem Zielfeuchtigkeitsniveau, wird der zweite Druckluftkreis mit Druckluft versorgt. Es wird also ein erster Druckluftkreis mit Druckluft versorgt, wobei während des Versorgens durch den Einsatz von Regeneriervorgängen das Feuchtigkeitsniveau des Lufttrockners niedrig gehalten wird. Ist der erste Druckluftkreis auf einen bestimmten Zieldruckwert befüllt, werden abwechselnd Regenerierungsvorgänge und Versorgungsvorgänge durchgeführt. Erst wenn sowohl ein Zielfeuchtigkeitsniveau als auch der Zieldruckwert vorliegen, wird ein zweiter Druckluftkreis mit Druckluft versorgt. Dadurch wird erreicht, dass das Versorgen des zweiten Druckluftkreises mit Druckluft unter genau definierten Bedingungen hinsichtlich der Feuchtigkeit des Lufttrockners und des Druckniveaus im ersten Druckluftkreis vorgenommen wird. Insbesondere kann das Befüllen des ersten Druckluftkreises mit Druckluft mit einem funktionsfähigen Lufttrockner erreicht werden und es kann weiterhin verhindert werden, dass der Lufttrockner schnell ein Sättigungsniveau erreicht. Dies kann insbesondere von Bedeutung sein, wenn der erste Druckluftkreis zur Betriebsbremsanlage gehört und der zweite Druckluftkreis unter anderem für die Feststellbremsanlage und beispielsweise die Druckluftverbraucher eines Anhängers vorgesehen sein. Auch wird erreicht, dass ein Einsatz des Fahrzeugs mit einem Lufttrockner auf niedrigem Feuchtigkeitsniveau beginnen kann, so dass auch bei einem starken Druckluftverbrauch während eines Einsatzes das Sättigungsniveau nicht erreicht wird.

Es kann besonders zweckmäßig sein, dass der Zieldruckwert der Maximaldruckwert ist. Somit wird der erste Druckluftkreis bis zum Maximum befüllt, bevor mit dem Befüllen des zweiten Druckluftkreises begonnen wird.

Es ist weiterhin vorteilhaft, wenn der Grenzdruckwert größer als ein Minimaldruckwert des ersten Druckluftkreises ist. Somit wird während des Regenerierens der Druck im ersten Druckluftkreis nie auf den Minimalsolldruckwert absinken.

Erfindungsgemäß ist weiterhin eine elektronische Steuereinrichtung zur Steuerung einer Druckluftversorgungseinrichtung eines Nutzfahrzeugs vorgesehen, welche zum Steuern eines der oben beschriebenen Verfahren eingerichtet ist.

Die Erfindung betrifft außerdem eine Druckluftversorgungseinrichtung eines Nutzfahrzeugs mit einer elektronischen Steuereinrichtung, die dazu eingerichtet ist, eines der oben beschriebenen Verfahren zu steuern.

Die Erfindung wird nun mit Bezug auf die begleitenden Zeichnungen anhand besonders bevorzugter Ausführungsformen beispielhaft erläutert.

Es zeigen:
- Figur 1: eine schematische Teildarstellung einer Druckluftversorgungseinrichtung;
- Figur 2: eine schematische Teildarstellung einer alternativen Druckluftversorgungseinrichtung;
- Figur 3: ein Verlaufsdiagramm eines Verfahrens zum Regenerieren einer Druckluftversorgungseinrichtung; und
- Figur 4: ein Verlaufsdiagramm eines weiteren Verfahrens zum Regenerieren einer Druckluftversorgungseinrichtung.

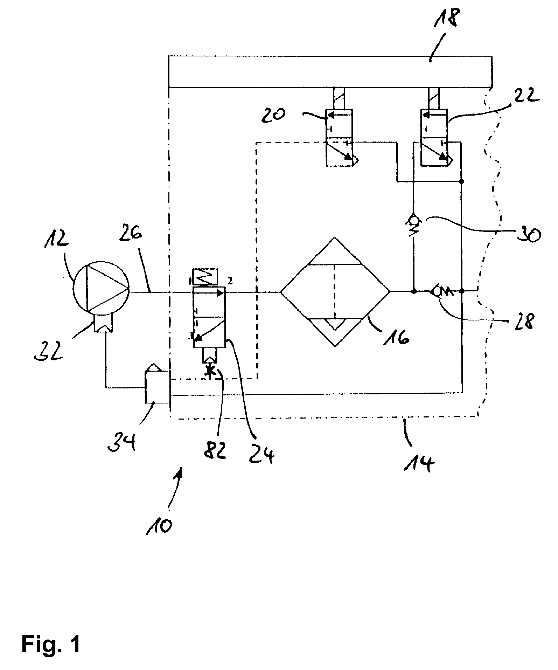

Figur 1 zeigt eine schematische Teildarstellung einer Druckluftversorgungseinrichtung, die für einen Regenerierungsvorgang geeignet ist. Im Rahmen der Erfindung sind auch anders ausgestaltete Druckluftversorgungseinrichtungen vorstellbar; die Erfindung ist prinzipiell mit jeder Art regenerierbarer Druckluftversorgungseinrichtung umsetzbar, die über eine geeignet eingerichtete Steuereinrichtung zum Steuern des Regenerierens verfügt.

Die Druckluftversorgungseinrichtung 10 umfasst einen Kompressor 12 und eine Luftaufbereitungsanlage 14. Diese Luftaufbereitungsanlage 14 ist im Allgemeinen mit einem nicht dargestellten Mehrkreisschutzventil kombiniert, oder sie ist diesem vorgeschaltet. Weiterhin weist eine herkömmliche Luftaufbereitungsanlage einen (nicht dargestellten) Druckregler auf. Auf bekannte Art und deswegen hier nicht dargestellt sind Druckluftkreise von Druckluftverbrauchern wie den Betriebsbremsen zur Versorgung mit Druckluft an die Druckluftversorgungseinrichtung 10 angeschlossen. Dazu ist eine Filtereinheit 16 über ein Rückschlagventil 28 mit diesen weiteren nicht dargestellten Komponenten verbunden. Die Filtereinheit 16 weist einen nicht weiter detailliert gezeigten Lufttrockner mit einer Lufttrocknerpatrone auf. Weiterer Bestandteil der Luftaufbereitungseinrichtung 14 ist eine elektronische Steuereinheit 18 (auch als ECU=electronic control unit bezeichnet). Diese elektronische Steuereinheit 18 dient unter anderem der Ansteuerung eines ersten Magnetventils 20 und eines zweiten Magnetventils 22. Das zweite Magnetventil 22 ist in einem Strömungsweg angeordnet, der das Rückschlagventil 28 umgeht. Dieser Strömungsweg enthält ein weiteres Rückschlagventil 30, das eine Strömung von dem zweiten Magnetventil 22 zu der Filtereinheit 16 zulässt und eine umgekehrte Strömung unterbindet. Ferner ist ein pneumatisch ansteuerbares 3/2-Wegeventil 24 in einer Förderleitung 26 zwischen dem Kompressor 12 und der Filtereinheit 16 angeordnet. Der Kompressor ist über einen pneumatischen Eingang 32 zur Ansteuerung einer Energiespareinrichtung mit einem Relaisventil 34 gekoppelt, dessen weitere Funktionsweise im Zusammenhang mit der nachfolgenden Beschreibung der mit der Regenerierung der Filtereinheit 16 und der Leerlaufschaltung des Kompressors 12 im Zusammenhang stehenden Vorgänge näher erläutert wird.

Wird eine Regenerierung der Filtereinheit 16 gefordert, so wird das Magnetventil 22 geöffnet. Im Wesentlichen gleichzeitig wird das Magnetventil 20 geöffnet. Dies kann durch die Steuereinrichtung 18 gesteuert werden. Das Öffnen des Magnetventils 20 hat zur Folge, dass einerseits das 3/2-Wegeventil 24 umschaltet und dass andererseits der pneumatische Steuereingang 32 des Kompressors 12 mit Druckluft beaufschlagt wird. Letzteres erfolgt dadurch, dass das Relaisventil 34, welches Druckluft aus den nicht dargestellten Behältern der Betriebsbremse bezieht, angesteuert wird und somit den Systemdruck zur Ansteuerung des Kompressors 12 über den Steuereingang 32 durchsteuert. Die Umschaltung des 3/2-Wegeventils 24 hat zur Folge, dass über das Magnetventil 22 und die Filtereinheit 16 Druckluft zum Ausgang 3 abströmen kann. Die weitere Folge des Umschaltens des 3/2-Wegeventils 24 ist, dass die Leitung 26 zwischen dem Kompressor 12 und der Filtereinheit 16 gesperrt ist. Eine Drossel 82 dient dazu, die Umschaltung des 3/2-Ventlis zu verzögern. Bei der Regenerierung geht somit nicht die in dem Leitungsabschnitt zwischen Kompressor 12 und 3/2-Wegeventil 24 gespeicherte Druckluft verloren. Indem gleichzeitig mit der Regenerierung eine Absperrung der Leitung 26 erfolgt, wird der Staudruck am Ablass 3 gering gehalten, beispielsweise bei ca. 0,2 bar, während ohne Absperrung der Leitung 26 ein Staudruck von ca. 1,5 bar vorliegen kann.

Es ist aber auch möglich, das Magnetventil 20 anzusteuern, ohne dass im Wesentlichen gleichzeitig das Magnetventil 22 angesteuert wird. Dies ist sinnvoll, wenn die Förderleistung des Kompressors 12 nicht benötigt wird, ein Regenerieren jedoch nicht erforderlich ist. Zum Beenden des Regenerierens werden die Magnetventile 20 und 22 unter Steuerung durch die Steuereinrichtung 18 wieder geschlossen, und der ursprüngliche Zustand der Druckluftversorgungseinrichtung wieder hergestellt.

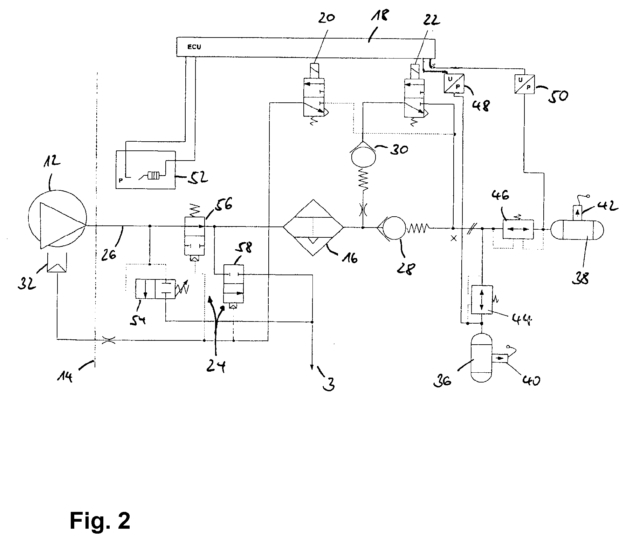

Figur 2 zeigt eine schematische Teildarstellung einer weiteren Druckluftversorgungseinrichtung. Zusätzlich zu den in Figur 1 dargestellten Komponenten sind Druckluftbehälter 36, 38 mit automatischen Ablassventilen 40, 42 sowie diesen Druckluftbehältern 36, 38 jeweils zugeordnete Überströmventile 44, 46 dargestellt. Die Druckluftbehälter 36, 38 und die zugeordneten Komponenten sind beispielsweise den Betriebsbremskreisen zugeordnet. Weiterhin sind Drucksensoren 48, 50 vorgesehen, welche die Drücke in den Druckluftbehältern 36, 38 messen und entsprechende Signale an die elektronische Steuereinheit 18 weitergeben. Ferner ist eine Heizung 52 dargestellt. An der Leitung 26 ist zwischen dem Kompressor 12 und der Filtereinheit 16 ein Sicherheitsventil 54 angeschlossen, über das Überdruck zum Ablass 3 weitergegeben werden kann. Die Ventileinrichtung 24 besteht im vorliegenden Fall aus zwei 2/2-Wegeventilen 56, 58. Diese 2/2-Wegeventile 56, 58 erfüllen die gleiche Aufgabe, wie das 3/2-Wegeventil 24 gemäß Figur 1. Sie werden gemeinsam beim Umschalten des Magnetventils 20 angesteuert, so dass sie ihre in Figur 2 nicht dargestellte Stellung einnehmen. Folglich wird die Leitung 26 zwischen dem Kompressor 12 und der Filtereinheit 16 unterbrochen, während der Weg für die Regenerierungsluft durch das 2/2-Wegeventil 58 zum Ablass 3 freigegeben wird. Es ist nicht notwendig, dass jedem Druckluftbehälter 36, 38 ein eigener Drucksensor zugewiesen wird.

Allgemein können an eine Druckluftversorgungseinrichtung 10 neben zwei Druckluftkreisen für die Betriebsbremse noch weitere nicht gezeigte Druckluftkreise angeschlossen sein. Dies gilt unabhängig von der konkreten Ausgestaltung der Druckluftversorgungseinrichtung. Insbesondere kann ein Druckluftkreis einer Feststellbremse vorgesehen sein, über den auch ein eventuell vorhandener Anhänger oder weitere Verbraucher mit Druckluft versorgt werden. Auch kann eine Luftfederung vorgesehen sein. Ferner kann ein Druckluftkreis eines Druckluftverbrauchers mit besonders hohem Druckluftverbrauch an die Druckluftversorgungseinrichtung 10 angeschlossen sein, beispielsweise eine pneumatische Hebevorrichtung für Container. Eine solche Hebevorrichtung wird häufig mit Drücken bis zu 15 bar beaufschlagt und verbraucht bei Hebevorgängen ein erhebliches Maß an Druckluft, die dem Druckluftkreis über die Filtereinheit 16 mit dem Lufttrockner zugeführt wird. Ein weiteres Beispiel für einen Verbraucher mit hohem Bedarf an Druckluft ist eine Anlage zum Befüllen von Reifen mit Druckluft.

Jedem Druckluftkreis ist ein Maximaldruck Pmax zugeordnet, bis zu dem der Druckluftkreis maximal zu befüllen ist. Für einen Druckluftkreis der Betriebsbremse beträgt dieser Maximaldruck Pmax üblicherweise 12,5 bar, für andere Druckluftkreise können andere Werte für den Maximaldruck gelten. Einem Druckluftkreis der Betriebsbremse ist auch ein Minimalsolldruckwert Pmin zugeordnet, den er mindestens aufweisen muss, damit die Betriebsbremse einsetzbar ist. Dieser Minimalsolldruckwert Pmin liegt üblicherweise bei 7,5 bar. Druckluftkreisen anderer Verbraucher können ebenfalls Minimalsolldruckwerte zugewiesen sein; dies muss aber nicht der Fall sein.

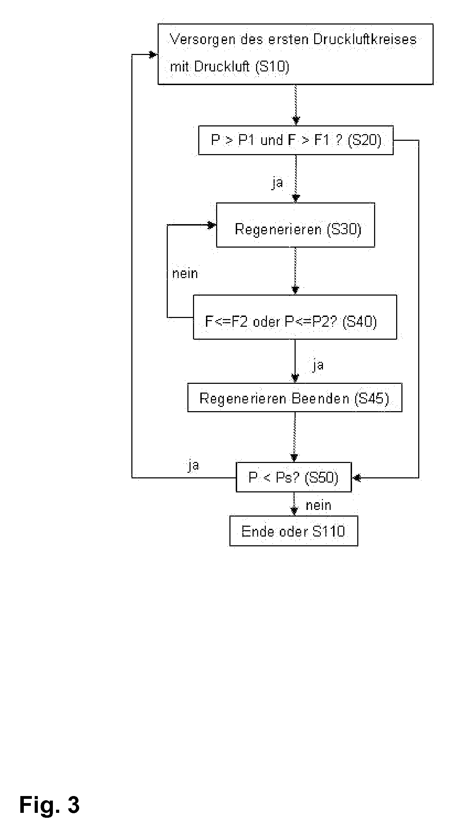

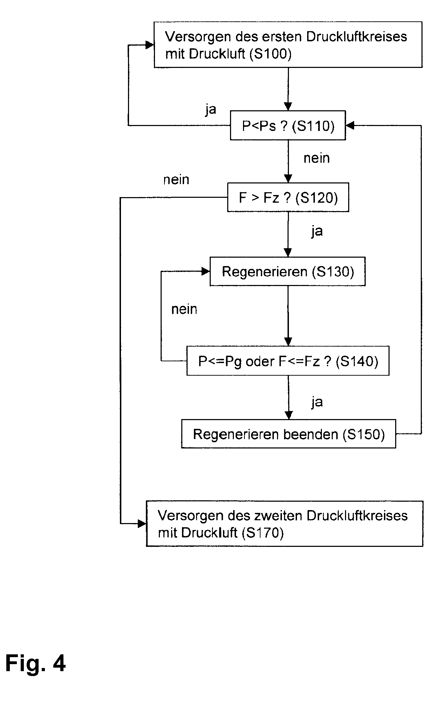

Figuren 3 und 4 zeigen Verfahren zum Regenerieren einer Druckluftversorgungseinrichtung. Diese Verfahren können beispielsweise mit einer der bisher beschriebenen Druckluftversorgungseinrichtungen durchgeführt werden und werden zweckmäßigerweise von einer Steuereinrichtung gesteuert.

Bei dem in Figur 3 gezeigten Verfahren wird in Schritt S10 ein erster Druckluftkreis mit Druckluft befüllt. Bei diesem ersten Druckluftkreis kann es sich bevorzugt um einen zur Betriebsbremsanlage gehörenden Druckluftkreis handeln. Der erste Druckluftkreis im Sinne dieser Beschreibung kann auch die üblicherweise vorhandenen beiden Druckluftkreisläufe der Betriebsbremse umfassen, die in der Regel parallel mit Druckluft versorgt werden.

In Schritt S20 wird überprüft, ob der Druck P im ersten Druckluftkreis über einem ersten Druckwert P1 liegt, und ob der Feuchtigkeitswert F über einem ersten Feuchtigkeitswert F1 liegt, also ob die Feuchtigkeit des Lufttrockners über einem vorbestimmten Niveau liegt. Diese Überprüfungen können von einer Steuereinrichtung 18 basierend auf Daten geeigneter Sensoren durchgeführt werden.

Ist dies der Fall, sind die Bedingungen für ein Regenerieren erfüllt, das in Schritt S30 gestartet wird. In Schritt S40 wird überprüft, ob der Feuchtigkeitswert F durch das Regenerieren einen vorbestimmten zweiten Feuchtigkeitswert F2 (es gilt F2<F1) erreicht hat, oder der Druck P im ersten Druckluftkreis auf oder unter einen zweiten Druckwert P2 gefallen ist, der kleiner ist als der erste Druckwert P1 (es gilt P2<P1). Ist beides nicht der Fall, wird mit dem Regenerieren in Schritt S30 fortgefahren.

Ansonsten wird in Schritt S45 das Regenerieren beendet und mit Schritt S50 fortgefahren, in dem überprüft wird, ob der Druck P unterhalb eines Zieldruckwertes Ps liegt. Zu Schritt S50 wird auch von Schritt S20 verzweigt, wenn die Bedingungen für ein Regenerieren nicht erfüllt sind. Liegt im ersten Druckluftkreis der Zieldruckwert noch nicht vor, wird von Schritt S50 zu Schritt S10 zurückverzweigt. Ist der Zieldruckwert Ps erreicht, ist das Verfahren beendet. Hier wird also eine Art "Zwischenregenerierung" durchgeführt, bei der beim Befüllen des ersten Druckluftkreises vor Erreichen des Zieldruckwertes Ps Regenerierungen durchgeführt werden, um das Feuchtigkeitsniveau auf einem niedrigen Niveau zu halten. Optional kann nun das in Figur 4 gezeigte Verfahren ausgeführt werden.

Figur 4 zeigt ein weiteres Verfahren. In Schritt S100 wird der erste Druckluftkreis mit Druckluft versorgt. Dies kann beispielsweise durch ein Verfahren erfolgen, wie es in Figur 3 gezeigt und oben beschrieben ist.

In Schritt S110 wird überprüft, ob der Druck P im versorgten Druckluftkreis einem Zieldruckwert Ps entspricht. Ist dies nicht der Fall, wird mit Schritt S100 fortgefahren, und der Druckluftkreis wird weiter mit Druckluft versorgt. Ist der Zieldruckwert Ps erreicht, wird in Schritt S120 überprüft, ob der Feuchtigkeitswert F des Lufttrockners beziehungsweise der Lufttrocknerpatrone über einem vorbestimmten Zielfeuchtigkeitswert Fz liegt. Ist dies nicht der Fall, liegen also sowohl ein gewünschter Druck Ps im ersten Druckluftkreis als auch ein gewünschtes niedriges Feuchtigkeitsniveau des Lufttrockners vor, wird in Schritt S170 mit dem Versorgen des zweiten Druckluftkreises mit Druckluft begonnen. Dieses Versorgen kann auf übliche Weise erfolgen.

Ansonsten wird in Schritt S130 ein Regenerieren der Druckluftversorgungseinrichtung gestartet. In Schritt S140 wird überprüft, ob der Druck P im ersten Druckluftkreis auf oder unter einen Grenzdruckwert Pg abgefallen ist (für den Pg<Ps gilt), oder ob der Feuchtigkeitswert F des Lufttrockners den Zielfeuchtigkeitswert Fz erreicht hat. Ist eines von beidem der Fall, wird das Regenerieren in Schritt S150 beendet und mit Schritt S110 fortgefahren. Ansonsten wird das Regenerieren in Schritt S130 weitergeführt.

Auch bei diesem Verfahren kann die Steuerung des Verfahrens durch eine Steuereinrichtung erfolgen, die mit geeigneten Sensoren kommuniziert, um die erforderlichen Überprüfungsschritte durchzuführen.

Es ist besonders zweckmäßig, die in Figuren 3 und 4 gezeigten Verfahren beim Starten eines Nutzfahrzeugs durchzuführen, wenn die Druckluftkreise initial befüllt werden. Beim einem solchen anfänglichen Befüllen ist die durch den Lufttrockner strömende Luftmenge nämlich besonders groß, da in der Regel alle den Druckluftkreisen zugeordneten Druckluftbehälter mit Druckluft befüllt werden müssen.

Es ist besonders vorteilhaft, das in Figur 4 gezeigte Verfahren nach dem in Figur 3 gezeigten Verfahren auszuführen. Durch eine derartige Kombination der Verfahren wird erreicht, dass während des Befüllens des ersten Druckluftkreises ein niedriges Feuchtigkeitsniveau aufrecht erhalten wird, und mit dem Befüllen des zweiten Druckluftkreises erst begonnen wird, wenn der erste Druckluftkreis seinen Solldruck erreicht hat und die Feuchtigkeit im Lufttrockner auf einem niedrigen Niveau liegt. Dadurch ergibt sich insgesamt nach dem Befüllen der ersten und zweiten Druckluftkreise ein geringeres Feuchtigkeitsniveau des Lufttrockners, wodurch gute Vorraussetzungen dafür geschaffen werden, dass selbst durch großen Druckluftverbrauch während eines Betriebs beispielsweise einer Hebevorrichtung das Sättigungsniveau des Lufttrockners nicht erreicht wird.

Es ist in der Regel zweckmäßig, den Zieldruckwert Ps als den Maximaldruckwert Pmax des ersten Druckluftkreises zu wählen. Der Zieldruckwert Ps kann auch kleiner als der Maximaldruckwert Pmax sein. Der erste Druckwert P1, der zweite Druckwert P2 und der Grenzdruckwert Pg sollten kleiner sein als der Zieldruckwert Ps. Wenn ein Minimalsolldruckwert Pmin für den Druckluftkreis vorliegt, etwa im Falle eines Druckluftkreises einer Betriebsbremse, sollten der erste Druckwert P1, der zweite Druckwert P2 und der Grenzdruckwert Pg zwischen Pmin und Pmax beziehungsweise zwischen Pmin und Ps liegen. Ist der erste Druckluftkreis der Betriebsbremse zugeordnet, ist es zweckmäßig, die Druckwerte P1=9 bar, P2=8 bar, Ps = 12,5 bar zu wählen. Pg wird zweckmäßig auf Pg=11 bar gesetzt, um zu vermeiden, dass sich bei nach dem Regenerieren erforderlichen Nachbefüllen zu viel Feuchtigkeit im Lufttrockner ansammelt. Wenn beide Verfahren nacheinander ausgeführt werde, kann auch Pg=P2 gesetzt werden.

Ferner ist es vorteilhaft, wenn die Feuchtigkeitswerte F1, F2 und Fz unterhalb eines Feuchtigkeitswertes liegen, der einer Sättigung des Lufttrockners entspricht. Insbesondere kann es vorteilhaft sein, wenn der Zielfeuchtigkeitswert Fz zu null gesetzt wird, also einem vollständig getrockneten oder trockenen Luftfilter entspricht. Dann wird das in Figur 4 gezeigte Regenerieren solange wiederholt, bis der Lufttrockner vollständig regeneriert ist. Das Versorgen des zweiten Druckluftkreises wird somit mit anfänglich vollständig trockenem Lufttrockner durchgeführt.

Bei den hier beschriebenen Verfahren kann vorgesehen sein, dass die verschiedenen Parameter wie Fz, P1, P2, Ps und Pg während der Ausführung des Verfahrens geändert und angepasst werden, um das Verfahren an geänderte Umstände anzupassen. Auch kann es sinnvoll sein, bei der Überprüfung, ob überprüfte Parameter oben genannte Bedingungen erfüllen, gewisse geeignete Abweichungen zuzulassen. Beispielsweise kann es sinnvoll sein, trotz einer geringfügigen Überschreitung des Zielfeuchtigkeitswertes Fz in einer Iteration des Schrittes S120 zu Schritt S170 zu verzweigen, wenn der erste Druckluftkreislauf vollständig befüllt ist, um zu vermeiden, dass sich das in Figur 4 gezeigt Verfahren in eine Endlosschleife begibt, bei dem ein weiteres geringfügiges Regenerieren gerade soviel Druckluft erfordert, dass die erforderliche Nachbefüllung wieder zu einem Überschreiten des Zielfeuchtigkeitswertes Fz führt. Alternativ können in einem solchen Fall auch die Kriterien für den Zieldruckwert "weich" gehandhabt werden.

Die beschriebenen Verfahren können zusätzlich zu anderen, bereits bekannten Regenerierungsverfahren durchgeführt werden. Auch können zusätzliche Schritte zum Versorgen von Druckluftkreisen mit Druckluft durchgeführt werden. Insbesondere kann vorgesehen sein, dass zwischen dem Befüllen des ersten Druckluftkreises mit Druckluft und dem Regenerieren des Lufttrockners auf den Zielfeuchtigkeitswert ein oder mehrere weitere Druckluftkreise befüllt werden. So ist vorstellbar, dass nach oder während dem Befüllen der Druckluftkreise der Betriebsbremse beispielsweise eine Luftfederung oder weitere Druckluftverbraucher mit Druckluft versorgt werden, bevor das Regenerieren auf den Zielfeuchtigkeitswert durchgeführt wird und der zweite Druckluftkreis (in diesem Fall vorzugsweise ein Druckluftkreis der Feststellbremse) mit Druckluft versorgt wird.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 1: Anschluss
- 2: Anschluss
- 3: Ablass
- 10: Druckluftversorgungsanlage
- 12: Kompressor
- 14: Luftaufbereitungsanlage
- 16: Filtereinheit
- 18: elektronische Steuereinheit
- 20: erstes Magnetventil
- 22: zweites Magnetventil
- 24: Ventileinrichtung
- 26: Förderleitung
- 28: Rückschlagventil
- 30: Rückschlagventil
- 32: Steuereingang
- 34: Relaisventil
- 36: Druckluftbehälter
- 38: Druckluftbehälter
- 40: Ablassventil
- 42: Ablassventil
- 44: Überströmventil
- 46: Überströmventil
- 48: Drucksensor
- 50: Drucksensor
- 52: Heizung
- 54: Sicherheitsventil
- 56: 2/2-Wegeventil
- 58: 2/2-Wegeventil
- 82: Drossel

## Patentansprüche

1. Verfahren zum Regenerieren einer Druckluftversorgungseinrichtung (10) eines Nutzfahrzeugs, wobei die Druckluftversorgungseinrichtung einen Lufttrockner (16) aufweist, und geeignet ist, einen ersten Druckluftkreis und einen zweiten Druckluftkreis mit Druckluft zu versorgen, wobei dem ersten Druckluftkreis ein vorbestimmter Maximaldruckwert (Pmax) zugeordnet ist, wobei das Verfahren die Schritte umfasst:
Versorgen des ersten Druckluftkreises mit Druckluft, bis der Druck im ersten Druckluftkreis einen vorbestimmten Zieldruckwert (Ps) erreicht hat;
Anschließendes Versorgen des zweiten Druckluftkreises mit Druckluft;
**dadurch gekennzeichnet, dass** zwischen den Schritten des Versorgens des ersten Druckluftkreises und des Versorgens des zweiten Druckluftkreises die folgenden Zwischenschritte ausgeführt werden:
Regenerieren des Lufttrockners mit Druckluft aus dem ersten Druckluftkreis, wenn der Druck (P) im ersten Druckluftkreis den Zieldruckwert (Ps) erreicht hat und ein Feuchtigkeitswert (F) des Lufttrockners über einem vorbestimmten Zielfeuchtigkeitswert (Fz) liegt;
Beenden des Regenerierens, wenn der Druck (P) im ersten Druckluftkreis auf einen vorbestimmten Grenzdruckwert (Pg) abgefallen ist oder der Feuchtigkeitswert (F) des Lufttrockners den Zielfeuchtigkeitswert (Fz) erreicht oder unterschritten hat;
Versorgen des ersten Druckluftkreises mit Druckluft, bis der erste Druckluftkreis den vorbestimmten Zieldruckwert (Ps) erreicht hat;
Wiederholen der vorhergehenden Zwischenschritte, wenn der Feuchtigkeitswert (F) des Lufttrockners größer als der Zielfeuchtigkeitswert (Fz) ist.

2. Verfahren nach Anspruch 1, wobei der Zieldruckwert (Ps) der Maximaldruckwert (Pmax) ist.

3. Verfahren nach Anspruch 1 oder 2, wobei der Grenzdruckwert (Pg) größer als ein vorbestimmter Minimalsolldruckwert (Pmin) des ersten Druckluftkreises ist.

4. Verfahren nach einem der Ansprüche 1 bis 3, wobei der Zielfeuchtigkeitswert (Fz) einem trockenen Lufttrockner entspricht.

5. Verfahren nach einem der Ansprüche 1 bis 4, wobei während eines Wiederholens ein geänderter Zieldruckwert (Ps) und/oder ein geänderter Zielfeuchtigkeitswert (Fz) und/oder ein geänderter Grenzdruckwert (Pg) verwendet wird.

6. Verfahren nach einem der Ansprüche 1 bis 5, wobei das Verfahren während eines Fahrbetriebs des Nutzfahrzeugs durchgeführt wird.

7. Verfahren nach einem der Ansprüche 1 bis 6, wobei das Verfahren bei einem Befüllen der Druckluftkreise bei einem Start des Nutzfahrzeugs durchgeführt wird.

8. Elektronische Steuereinrichtung zur Steuerung einer Druckluftversorgungseinrichtung eines Nutzfahrzeugs, wobei die elektronische Steuereinrichtung dazu eingerichtet ist, ein Verfahren nach einem der Ansprüche 1 bis 7 durchzuführen.

9. Druckluftversorgungseinrichtung eines Nutzfahrzeugs, mit einer elektronischen Steuereinrichtung nach Anspruch 8.

10. Verfahren zum Regenerieren einer Druckluftversorgungseinrichtung eines Nutzfahrzeugs, wobei die Druckluftversorgungseinrichtung einen Lufttrockner aufweist, mit den Schritten:
(1) Versorgen eines ersten Druckluftkreises mit Druckluft, wobei dem ersten Druckluftkreis ein vorbestimmter Maximaldruckwert (Pmax) zugeordnet ist;
(2) Regenerieren des Lufttrockners mit Druckluft aus dem ersten Druckluftkreis, wenn der Druck (P) im ersten Druckluftkreis mindestens einem vorbestimmten ersten Druckwert (P1) entspricht und das Feuchtigkeitsniveau (F) des Lufttrockners mindestens einem vorbestimmten ersten Feuchtigkeitswert (F1) entspricht;
(3) Beenden des Regenerierens, wenn der Druck (P) im ersten Druckluftkreis auf einen vorbestimmten zweiten Druckwert (P2) abgefallen ist, der kleiner ist als der erste Druckwert (P1), oder wenn das Feuchtigkeitsniveau (F) des Lufttrockners auf einen vorbestimmten zweiten Feuchtigkeitswert (F2) abgefallen ist, der geringer ist als der erste Feuchtigkeitswert (F1);
(4) Wiederholen der vorhergehenden Schritte (1) bis (3), wenn der Druck (P) im ersten Druckluftkreis geringer ist als ein Zieldruckwert (Ps);
wobei der erste Druckwert (P1) kleiner ist als der Zieldruckwert (Ps).

11. Verfahren nach Anspruch 10, wobei das Verfahren bei einem Befüllen von Druckluftkreisen bei einem Start des Nutzfahrzeugs durchgeführt wird.

12. Verfahren nach Anspruch 10 oder 11, wobei der zweite Druckwert (P2) über einem Minimalsolldruckwert (Pmin) des ersten Druckluftkreises liegt.

13. Verfahren nach einem der Ansprüche 10 bis 12, wobei der erste und der zweite Feuchtigkeitswert (F1, F2) unter einem Sättigungsfeuchtigkeitswert des Lufttrockners liegen.

14. Verfahren nach einem der Ansprüche 10 bis 13, wobei während eines Wiederholens ein geänderter erster Druckwert (P1) und/oder ein geänderter zweiter Druckwert (P2) verwendet wird.

15. Verfahren nach einem der Ansprüche 10 bis 14, wobei während eines Wiederholens ein geänderter erster Feuchtigkeitswert (F1) und/oder ein geänderter zweiter Feuchtigkeitswert (F2) verwendet wird.

16. Verfahren nach einem der Ansprüche 10 bis 15, wobei das Verfahren während eines Fahrbetriebs des Nutzfahrzeugs durchgeführt wird.

17. Verfahren nach einem der Ansprüche 10 bis 16, wobei die Druckluftversorgungseinrichtung (10) ferner geeignet ist, einen zweiten Druckluftkreis mit Druckluft zu versorgen und das Verfahren vor einem Schritt des Versorgens des zweiten Druckluftkreises mit Druckluft ferner die Zwischenschritte umfasst:
(5) Regenerieren des Lufttrockners mit Druckluft aus dem ersten Druckluftkreis, wenn der Druck (P) im ersten Druckluftkreis den Zieldruckwert (Ps) erreicht hat und ein Feuchtigkeitswert (F) des Lufttrockners über einem vorbestimmten Zielfeuchtigkeitswert (Fz) liegt;
(6) Beenden des Regenerierens, wenn der Druck (P) im ersten Druckluftkreis auf einen vorbestimmten Grenzdruckwert (Pg) abgefallen ist, oder der Feuchtigkeitswert (F) des Lufttrockners den Zielfeuchtigkeitswert (Fz) erreicht oder unterschritten hat;
(7) Versorgen des ersten Druckluftkreises mit Druckluft, bis der erste Druckluftkreis den vorbestimmten Zieldruckwert (Ps) erreicht hat;
(8) Wiederholen der vorhergehenden Zwischenschritte (5) bis (7), wenn der Feuchtigkeitswert (F) des Lufttrockners größer als der Zielfeuchtigkeitswert (Fz) ist.

18. Verfahren nach einem der Ansprüche 10 bis 17, wobei der Zieldruckwert (Ps) der Maximaldruckwert (Pmax) ist.

19. Verfahren nach Anspruch 17, wobei der Grenzdruckwert (Pg) größer als ein Minimalsolldruckwert (Pmin) des ersten Druckluftkreises ist.

20. Elektronische Steuereinrichtung (18) zur Steuerung einer Druckluftversorgungseinrichtung eines Nutzfahrzeugs, wobei die elektronische Steuereinrichtung (18) dazu eingerichtet ist, ein Verfahren nach einem der Ansprüche 10 bis 19 zu steuern.

21. Druckluftversorgungseinrichtung (10) eines Nutzfahrzeugs, mit einer elektronischen Steuereinrichtung (18) nach Anspruch 20.

## Claims

1. Method for regenerating a compressed air supply device (10) of a commercial vehicle, wherein the compressed air supply device comprises an air drier (16) and is suitable for supplying a first pneumatic circuit and a second pneumatic circuit with compressed air, wherein a predetermined maximum pressure value (Pmax) is assigned to the first pneumatic circuit, the method comprising the steps of:
supplying the first pneumatic circuit with compressed air until the pressure in the first pneumatic circuit has reached a predetermined target pressure (Ps);
followed by supplying the second pneumatic circuit with compressed air;
**characterised in that** between the steps of supplying the first pneumatic circuit and supplying the second pneumatic circuit, the following intermediate steps are carried out:
regenerating the air drier with compressed air from the first pneumatic circuit if the pressure (P) in the first pneumatic circuit has reached the target pressure value (Ps) and a humidity value (F) of the air drier exceeds a predetermined target humidity value (Fz);
terminating the regeneration if the pressure (P) in the first pneumatic circuit has dropped to a predetermined limit pressure value (Pg) or the humidity value (F) of the air drier has reached or fallen below the target humidity value (Fz);
supplying the first pneumatic circuit with compressed air until the first pneumatic circuit has reached the target pressure value (Ps);
repeating the above intermediate steps if the humidity value (F) of the air drier is higher than the target humidity value (Fz).

2. Method according to claim 1, wherein the target pressure value (Ps) is the maximum pressure value (Pmax).

3. Method according to claim 1 or 2, wherein the limit pressure value (Pg) is higher than a predetermined minimum set pressure value (Pmin) of the first pneumatic circuit.

4. Method according to any of claims 1 to 3, wherein the target humidity value (Fz) corresponds to a dry air drier.

5. Method according to any of claims 1 to 4, wherein during a repetition a changed target pressure value (Ps) and/or a changed target humidity value (Fz) and/or a changed limit pressure value (Pg) is/are used.

6. Method according to any of claims 1 to 5, wherein the method is carried out during a travelling operation of the commercial vehicle.

7. Method according to any of claims 1 to 6, wherein the method is carried out while charging the pneumatic circuits at a start of the commercial vehicle.

8. Electronic control device for controlling a compressed air supply device of a commercial vehicle, the electronic control device being designed for carrying out a method according to any of claims 1 to 7.

9. Compressed air supply device of a commercial vehicle, comprising an electronic control device according to claim 8.

10. Method for regenerating a compressed air supply device of a commercial vehicle, the compressed air supply device comprising an air drier, the method comprising the steps of:
(1) supplying the first pneumatic circuit with compressed air, wherein a predetermined maximum pressure value (Pmax) is assigned to the first pneumatic circuit;
(2) regenerating the air drier with compressed air from the first pneumatic circuit if the pressure (P) in the first pneumatic circuit corresponds to at least a predetermined first pressure value (P1) and the humidity level (F) of the air drier corresponds to at least a predetermined first humidity value (F1);
(3) terminating the regeneration if the pressure (P) in the first pneumatic circuit has dropped to a predetermined second pressure value (P2) lower than the first pressure value (P1), or if the humidity level (F) of the air drier has dropped to a predetermined second humidity value (F2) lower than the first humidity value (F1);
(4) repeating the above steps (1) to (4) if the pressure (P) in the first pneumatic circuit is lower than a target pressure value (Ps);
the first pressure value (P1) being lower than the target pressure value (Ps).

11. Method according to claim 10, wherein the method is carried out while charging pneumatic circuits at a start of the commercial vehicle.

12. Method according to claim 10 or 11, wherein the second pressure value (P2) is higher than a minimum set pressure value (Pmin) of the first pneumatic circuit.

13. Method according to any of claims 10 to 12, wherein the first and the second humidity values (F1, F2) are lower than a saturation humidity value of the air drier.

14. Method according to any of claims 10 to 13, wherein during a repetition a changed first pressure value (P1) and/or a changed second pressure value (P2) is/are used.

15. Method according to any of claims 10 to 14, wherein during a repetition a changed first humidity value (F1) and/or a changed second humidity value (F2) is/are used.

16. Method according to any of claims 10 to 15, wherein the method is carried out during a travelling operation of the commercial vehicle.

17. Method according to any of claims 10 to 16, wherein the compressed air supply device (10) is further suitable for supplying a second pneumatic circuit with compressed air, and wherein the method comprises, before a step of supplying the second pneumatic circuit with compressed air, further the following intermediate steps:
(5) regenerating the air drier with compressed air from the first pneumatic circuit if the pressure (P) in the first pneumatic circuit has reached the target pressure value (Ps) and a humidity value (F) of the air drier exceeds a predetermined target humidity value (Fz);
(6) terminating the regeneration if the pressure (P) in the first pneumatic circuit has dropped to a predetermined limit pressure value (Pg), or if the humidity value (F) of the air drier has reached or fallen below the target humidity value (Fz);
(7) supplying the first pneumatic circuit with compressed air until the first pneumatic circuit has reached the predetermined target pressure value (Ps);
(8) repeating the above intermediate steps (5) to (7) if the humidity value (F) of the air drier is higher than the target humidity value (Fz).

18. Method according to any of claims 10 to 17, wherein the target pressure value (Ps) is the maximum pressure value (Pmax).

19. Method according to claim 17, wherein the limit pressure value (Pg) is higher than a minimum pressure value (Pmin) of the first pneumatic circuit.

20. Electronic control device (18) for controlling a compressed air supply device of a commercial vehicle, the electronic control device (18) being designed for controlling a method according to any of claims 10 to 19.

21. Compressed air supply device (10) of a commercial vehicle, comprising an electronic control device (18) according to claim 20.

## Revendications

1. Procédé de régénération d'un dispositif (10) d'alimentation en air comprimé d'un véhicule utilitaire, dans lequel le dispositif d'alimentation en air comprimé a un déshydrateur (16) d'air et est propre à alimenter en air comprimé un premier circuit d'air comprimé et un deuxième circuit d'air comprimé, une valeur (Pmax) de pression maximum définie à l'avance étant affectée au premier circuit d'air comprimé, le procédé comprenant les stades :
alimentation en air comprimé du premier circuit d'air comprimé jusqu'à ce que la pression, dans le premier circuit d'air comprimé, ait atteint une valeur (Ps) de pression cible définie à l'avance ;
ensuite, alimentation en air comprimé du deuxième circuit d'air comprimé ;
**caractérisé en ce que**, entre les stades de l'alimentation du premier circuit d'air comprimé et de l'alimentation du deuxième circuit d'air comprimé, on effectue les stades intermédiaires suivants :
régénération du déshydrateur d'air par de l'air comprimé provenant du premier circuit d'air comprimé, si la pression (P), dans le premier circuit d'air comprimé, a atteint la valeur (Ps) de pression cible et si une valeur (f) d'humidité du déshydrateur d'air se trouve au-dessus d'une valeur (Fz) d'humidité cible définie à l'avance ;
arrêt de la régénération, si la pression (P), dans le premier circuit d'air comprimé, s'est abaissée à une valeur (Pg) de pression limite définie à l'avance ou si la valeur (F) de l'humidité du déshydrateur d'air atteint la valeur (Fz) d'humidité cible ou lui est inférieure ;
alimentation en air comprimé du premier circuit d'air comprimé jusqu'à ce que le premier circuit d'air comprimé ait atteint la valeur (Ps) de pression cible définie à l'avance ;
répétition des stades intermédiaires précédents, si la valeur (F) d'humidité du déshydrateur d'air est plus grande que la valeur (Fz) d'humidité cible.

2. Procédé suivant la revendication 1, dans lequel la valeur (Ps) de pression cible est la valeur (Pmax) de pression maximum.

3. Procédé suivant la revendication 1 ou 2, dans lequel la valeur (Pg) de pression limite est plus grande qu'une valeur (Pmin) de pression de consigne minimum définie à l'avance du premier circuit d'air comprimé.

4. Procédé suivant l'une des revendications 1 à 3, dans lequel la valeur (Fz) d'humidité cible correspond à un déshydrateur d'air séché.

5. Procédé suivant l'une des revendications 1 à 4, dans lequel, pendant une répétition, on utilise une valeur (Ps) de pression cible modifiée et/ou une valeur (Fz) d'humidité cible modifiée et/ou une valeur (Pg) de pression limite modifiée.

6. Procédé suivant l'une des revendications 1 à 5, dans lequel on effectue le procédé pendant que le véhicule utilitaire est en marche.

7. Procédé suivant l'une des revendications 1 à 6, dans lequel on effectue le procédé alors que l'on remplit le circuit d'air comprimé lors d'un démarrage du véhicule utilitaire.

8. Dispositif électronique de commande pour la commande d'un dispositif d'alimentation en air comprimé d'un véhicule utilitaire, le dispositif électronique de commande étant conçu pour effectuer un procédé suivant l'une des revendications 1 à 7.

9. Dispositif d'alimentation en air comprimé d'un véhicule utilitaire ayant un dispositif électronique de commande suivant la revendication 8.

10. Procédé de régénération d'un dispositif d'alimentation en air comprimé d'un véhicule utilitaire, le dispositif d'alimentation en air comprimé ayant un déshydrateur d'air comprenant les stades :
(1) alimentation en air comprimé d'un premier circuit d'air comprimé, une valeur (Pmax) de pression maximum définie à l'avance étant affectée au premier circuit d'air comprimé ;
(2) régénération du déshydrateur d'air par de l'air comprimé provenant du premier circuit d'air comprimé, si la pression (P), dans le premier circuit d'air comprimé, correspond au moins à une première valeur (P1) de pression définie à l'avance et si le niveau (F) d'humidité du déshydrateur d'air correspond à au moins une première valeur (F1) d'humidité définie à l'avance ;
(3) arrêt de la régénération, si la pression (P) dans le premier circuit d'air comprimé s'est abaissée à une deuxième valeur (P2) de pression définie à l'avance, qui est plus petite que la première valeur (P1) de pression, ou, si le niveau (F) d'humidité du déshydrateur d'air s'est abaissée à une deuxième valeur (F2) d'humidité définie à l'avance, qui est plus petite que la première valeur (F1) d'humidité ;
(4) répétition des stades (1) à (3) précédents, si la pression (P), dans le premier circuit d'air comprimé, est plus petite qu'une valeur (Ps) de pression cible ;
dans lequel la première valeur (P1) de pression est plus petite que la valeur (Ps) de pression cible.

11. Procédé suivant la revendication 10, dans lequel on effectue le procédé lorsque l'on remplit les circuits d'air comprimé au démarrage d'un véhicule utilitaire.

12. Procédé suivant la revendication 10 ou 11, dans lequel la deuxième valeur (P2) de pression est supérieure à une valeur (Pmin) de pression de consigne minimum du premier circuit d'air comprimé.

13. Procédé suivant l'une des revendications 10 à 12, dans lequel la première et la deuxième valeurs (F1, F2) d'humidité sont inférieures à une valeur d'humidité de saturation du déshydrateur d'air.

14. Procédé suivant l'une des revendications 10 à 13, dans lequel, pendant une répétition, on utilise une première valeur (P1) de pression modifiée et/ou une deuxième valeur (P2) de pression modifiée.

15. Procédé suivant l'une des revendications 10 à 14, dans lequel, pendant une répétition, on utilise une première valeur (F1) d'humidité modifiée et/ou une deuxième valeur (F2) d'humidité modifiée.

16. Procédé suivant l'une des revendications 10 à 15, dans lequel on effectue le procédé pendant que le véhicule utilitaire est en marche.

17. Procédé suivant l'une des revendications 10 à 16, dans lequel le dispositif (10) d'alimentation en air comprimé est propre, en outre, à alimenter en air comprimé un deuxième circuit d'air comprimé et le procédé comprend, avant un stade d'alimentation en air comprimé du deuxième circuit d'air comprimé, en outre, les stades intermédiaires :
(5) régénération du déshydrateur d'air par de l'air comprimé provenant du premier circuit d'air comprimé, si la pression (P), dans le premier circuit d'air comprimé, a atteint la valeur (Ps) de pression cible et si une valeur (f) d'humidité du déshydrateur d'air se trouve au-dessus d'une valeur (Fz) d'humidité cible définie à l'avance ;
(6) arrêt de la régénération, si la pression (P), dans le premier circuit d'air comprimé, s'est abaissée à une valeur (Pg) de pression limite définie à l'avance ou si la valeur (F) de l'humidité du déshydrateur d'air atteint la valeur (Fz) d'humidité cible ou lui est inférieure ;
(7) alimentation en air comprimé du premier circuit d'air comprimé jusqu'à ce que le premier circuit d'air comprimé ait atteint la valeur (Ps) de pression cible définie à l'avance ;
(8) répétition des stades (5) à (7) intermédiaires précédents, si la valeur (F) d'humidité du déshydrateur d'air est plus grande que la valeur (Fz) d'humidité cible.

18. Procédé suivant l'une des revendications 10 à 17, dans lequel la valeur (Ps) de pression cible est la valeur (Pmax) de pression maximum.

19. Procédé suivant la revendication 17, dans lequel la valeur (Pg) de pression limite est plus grande qu'une valeur (Pmin) de pression de consigne minimum définie à l'avance du premier circuit d'air comprimé.

20. Dispositif (18) électronique de commande pour commander un dispositif d'alimentation en air comprimé d'un véhicule utilitaire, le dispositif (18) électronique de commande étant conçu pour commander un procédé suivant l'une des revendications 10 à 19.

21. Dispositif (10) d'alimentation en air comprimé d'un véhicule utilitaire ayant un dispositif (18) électronique de commande suivant la revendication 20.
